# EUROPÄISCHE PATENTSCHRIFT

(11) **EP 1 086 309 B1**
(45) Veröffentlichungstag und Bekanntmachung des Hinweises auf die Patenterteilung: **10.12.2003**
(21) Anmeldenummer: 00936611.3
(22) Anmeldetag: 12.04.2000
(51) Int. Cl.: F02N 11/04

(54) **STARTER-GENERATOR FÜR EIN KRAFTFAHRZEUG**
STARTER-GENERATOR FOR A MOTOR VEHICLE
DEMARREUR-GENERATEUR POUR AUTOMOBILE

(30) Priorität: 12.04.1999 DE 19916459
(43) Veröffentlichungstag der Anmeldung: 28.03.2001
(73) Patentinhaber: ROBERT BOSCH GMBH, 70442 Stuttgart (DE)
(72) Erfinder: VLEMMINGS, Johannes, D-71263 Weil der Stadt (DE); MANGOLD, Torsten, D-71522 Backnang (DE); GLAUNING, Juergen, D-71711 Steinheim (DE)
(86) Internationale Anmeldenummer: DE0001129
(87) Internationale Veröffentlichungsnummer: WO00061941

(56) Entgegenhaltungen:
- EP-A- 0 621 152
- PATENT ABSTRACTS OF JAPAN vol. 012, no. 481 (E-694), 15. Dezember 1988 (1988-12-15) & JP 63 198562 A (MITSUBISHI ELECTRIC CORP), 17. August 1988 (1988-08-17)

## Beschreibung

### Stand der Technik

Die Erfindung betrifft einen Starter-Generator für ein Kraftfahrzeug mit einer elektrischen Maschine, die wählbar mit einer Brennkraftmaschine und/oder einem Getriebe des Kraftfahrzeugs kuppelbar ist. Bekannte derartige Starter-Generatoren sind an den Antriebsstrang eines Kraftfahrzeugs über einen Riementrieb oder Kegelräder angebunden. Beide Arten von Anbindungen bringen mit sich, dass der Starter-Generator relativ zu einer Baueinheit aus Brennkraftmaschine und Getriebe seitlich versetzt angeordnet ist, so dass es schwierig ist, den Starter-Generator mit den zwei vorgenannten Komponenten zu einer kompakten und platzsparenden Baugruppe zusammenzufügen.

Aus der EP-A-0 621 152 ist ein Starter-Generator für ein Kraftfahrzeug bekannt gemäß Oberbegriff des Anspruchs 1, der eine mit einer Brennkraftmaschine koppelbare elektrische Maschine umfasst. Die elektrische Maschine ist in einem flachzylindrischen Gehäuse untergebracht, das an einer Stirnseite mit Mitteln zur Befestigung an der Brennkraftmaschine versehen ist, wobei die elektrische Maschine wählbar mit der Brennkraftmaschine und/oder einem Getriebe des Kraftfahrzeuges koppelbar ist und wobei das Gehäuse an einer zusätzlichen, in axialer Richtung entgegengesetzten Stirnseite mit Mitteln zur Befestigung an einem Gehäuse des Getriebes versehen ist.

### Vorteil der Erfindung

Der Starter-Generator nach Anspruch 1 erlaubt die Schaffung einer kompakten Baueinheit, indem mit Hilfe des erfindungsgemäßen Starter-Generators als Zwischenstück Brennkraftmaschine und Getriebe linear zu einer Einheit zusammengefaßt werden.

Bei einer solchen dicht gepackten Anordnung ist eine effiziente Kühlung der elektrischen Maschine des Starter-Generators von Bedeutung. Es wird deshalb ferner vorgeschlagen, in einer radialen Außenwand des Gehäuses einen in axialer Richtung hin- und herschwingend verlaufenden Kühlkanal vorzusehen. Dieser Verlauf des Kühlkanals ermöglicht es nicht nur, diesen länger zu machen, als dem Umfang des Gehäuses entspricht, er erlaubt auch, als Mittel zur Befestigung des Starter-Generators an der Brennkraftmaschine beziehungsweise dem Getriebegehäuse Sacklöcher für Schrauben, Bolzen oder dergleichen vorzusehen, die sich von einer Stirnseite aus in die Außenwand des Gehäuses an einer Stelle erstrecken, an der der Kühlkanal von der betreffenden Stirnseite entfernt verläuft. Somit steht trotz Vorhandenseins des Kühlkanals die gesamte Stärke der radialen Außenwand für die Befestigung des Starter-Generators an der Brennkraftmaschine beziehungsweise dem Getriebegehäuse zur Verfügung. Das Gehäuse des Starter-Generators ist vorzugsweise einteilig in einem Gießverfahren hergestellt. Ein zum Bilden des Kühlkanals benötigter Gußkern, zum Beispiel aus Formsand, kann nach Durchführung des Gusses durch Schlitze an einer der Stirnflächen des Gehäuses entfernt werden. Diese Schlitze werden zweckmäßigerweise nach Entfernen des Gußkerns dicht verschlossen.

Alternativ kann ein Gußkern, zum Beispiel aus einem Kunststoffschaum, verwendet werden, der beim Gießen verdampft. In einem solchen Fall ist es möglich, den entstehenden Dampf über Kühlmittelanschlüsse des Kühlkanals, die ohnehin vorgesehen werden müssen, abzuführen. Unter diesen Umständen kann auf die oben erwähnten Schlitze verzichtet werden.

Der Rotor der elektrischen Maschine ist zweckmäßigerweise von einem sich radial erstreckenden Flansch getragen, der Teil des Gehäuses ist. Dabei kann zwischen dem Flansch und dem Rotor ein Aktuator vorgesehen sein, der ein Stellglied zum Betätigen einer Kupplung für den Starter-Generator darstellt.

An der dem Flansch zugewandten Seite des Rotors ist vorzugsweise ein Hohlraum gebildet, der Platz für ein Impulsrad und einen Sensor zum Erfassen einer Drehung des Impulsrades bietet. Um eine Drehung des Rotors mit möglichst geringen Toleranzen und infolgedessen einen möglichst kleinen Luftspalt zwischen dem Rotor und einem zugehörigen Stator zu ermöglichen, ist der Rotor vorzugsweise über Wälzlager, das heißt insbesondere über ein oder zwei Kugel- oder Nadellager getragen.

Gemäß einer bevorzugten Ausgestaltung umfaßt der Rotor ein Blechpaket mit Kurzschlußringen und Kurzschlußstäben sowie Armierungsringe, die an Enden der Kurzschlußstäbe verankert sind, die an den axialen Seiten des Blechpakets überstehen. Durch die Anordnung der Armierungsringe an den axialen Stirnseiten wird eine Materialschwächung der Kurzschlußringe und -stäbe beziehungsweise des Blechpakets oder eine Vergrößerung des Luftspalts vermieden, die bei einer radial äußeren Anbringung der Armierungsringe erforderlich wären. Trotzdem bieten die Armierungsringe einen wirksamen Schutz der - vorzugsweise aus Kupfer bestehenden - Kurzschlußstäbe vor Fliehkräften, insbesondere verhindern sie ein Fließen von deren überstehenden Enden radial nach außen.

Weitere Funktionen der Armierungsringe können die axiale Fixierung des Rotors auf seiner Nabe oder die Auswuchtung des Rotors sein. Selektiver Materialabtrag an den Armierungsringen, insbesondere an deren radialer Innenseite, ermöglicht eine exakte Auswuchtung des Rotors, ohne daß dies Auswirkungen auf die mechanische Stabilität oder die elektrischen Eigenschaften des Rotors hat.

Gemäß einer anderen bevorzugten Ausgestaltung umfaßt der Rotor ein Blechpaket mit Kurzschlußleitern, wobei die Kurzschlußleiter durch Ausgießen von Aussparungen des Blechpakets, zum Beispiel durch Druckguß von Aluminium, gebildet sind. Da die Materialfestigkeit bei einer solchen Rotorkonstruktion höher ist als bei Verwendung von Kurzschlußstäben und -ringen aus Kupfer, kann auf die Armierungsringe verzichtet werden, wodurch sich die Herstellung vereinfacht und die Montagekosten sich verringern.

Um die axiale Baulänge des Starter-Generators möglichst gering halten zu können, kann vorgesehen werden, daß die Wickelköpfe des Stators der elektrischen Maschine in radialer Richtung abgebogen sind.

Der Stator der elektrischen Maschine ist vorzugsweise mit dem Gehäuse thermisch gefügt. Auf diese Weise läßt sich mit einfachen Mitteln ein großflächiger thermischer Kontakt mit erheblichem Kontaktdruck und dementsprechend guten Wärmeübergangseigenschaften zwischen dem Stator und dem Gehäuse schaffen.

Andere vorteilhafte Weiterentwicklungen der Erfindung sind in der nachfolgenden Beschreibung mit Bezug auf die Figuren sowie in den Ansprüchen genannt.

### Figuren

Es zeigen
- Figuren 1,2 und 3: perspektivische Ansichten eines Gehäuses eines Starter-Generators der Erfindung;
- Figur 4: einen Starter-Generator im axialen Schnitt; und
- Figur 5: eine Draufsicht auf ein Gehäuse mit montiertem Stator und Aktuator.

### Beschreibung von Ausführungsbeispielen

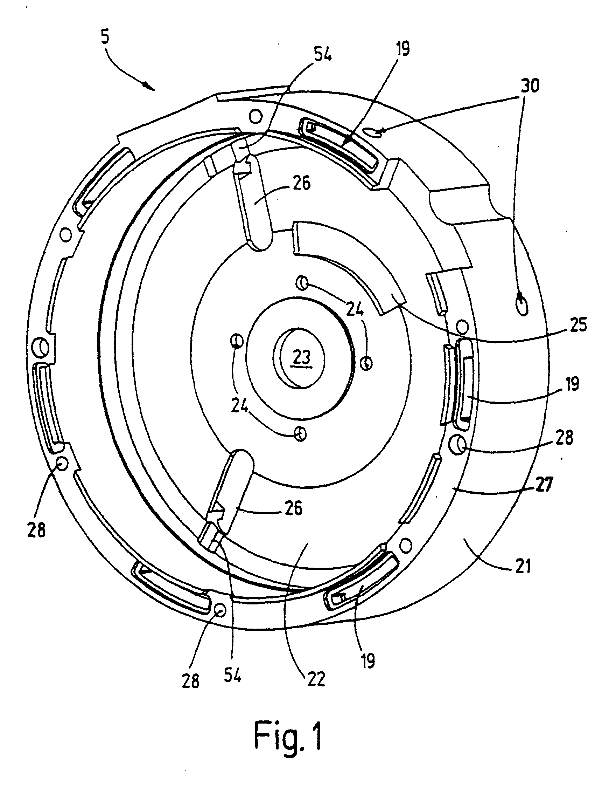

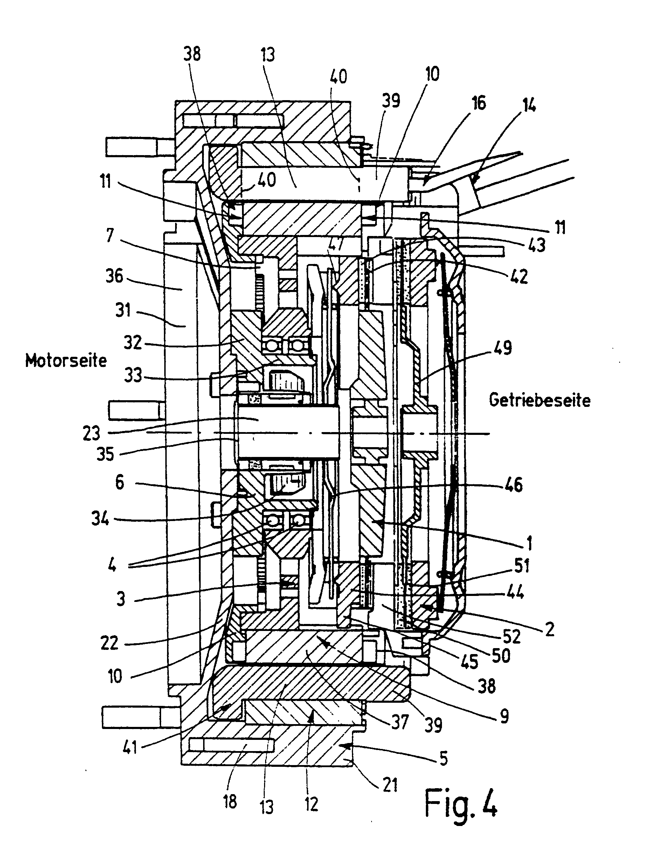

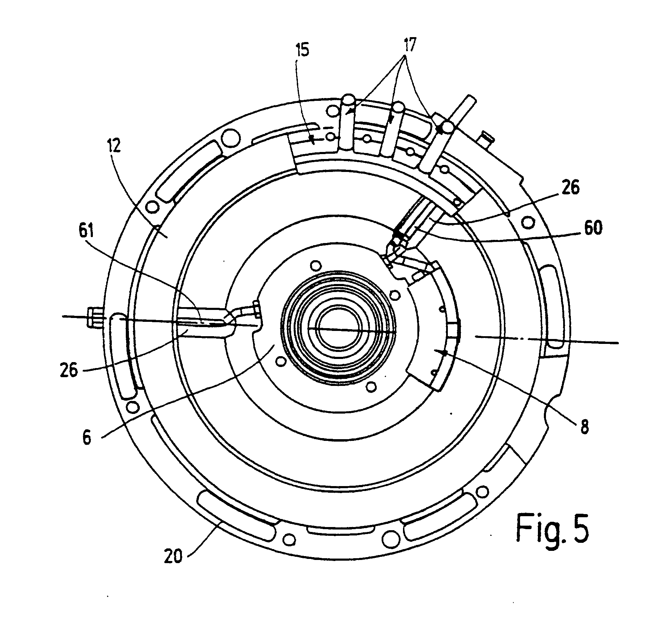

Das in Figur 1 perspektivisch gezeigte Gehäuse 5 eines Starter-Generators hat im wesentlichen eine flachzylindrische Form mit einer ringförmigen radialen Außenwand 21 und einem Flansch 22, der sich in im wesentlichen radialer Richtung zwischen einer zentralen Öffnung 23 und der Außenwand 21 erstreckt. Vier Bohrungen 24 in dem Flansch 22 dienen zur Befestigung eines Aktuators, der in dieser Figur nicht dargestellt ist, und erst in Verbindung mit Figur 4 behandelt wird. Ein kreissegmentförmiger Ausschnitt 25 im Flansch 22 ist vorgesehen, um einen Sensor zum Erfassen von Drehungen der elektrischen Maschine aufzunehmen. Zwei radial orientierte Schlitze 26 und, in Verlängerung von diesen, Bohrungen 54 durch die Außenwand 21 dienen zum Durchführen von Versorgungsleitungen für den Aktuator und den Sensor, wie in Verbindung mit Figur 5 noch genauer beschrieben wird. An der dem Betrachter zugewandten Stirnseite 27 der Außenwand 21 sind sechs Schlitze 19 und zwischen diesen Gewinde-Sackbohrungen 28 zu sehen. Die Schlitze 19 münden auf einen Kühlkanal, der im Inneren der Außenwand 21 zwischen der Stirnseite 27 und der vom Betrachter abgewandten Stirnseite hin und her schwingend verläuft.

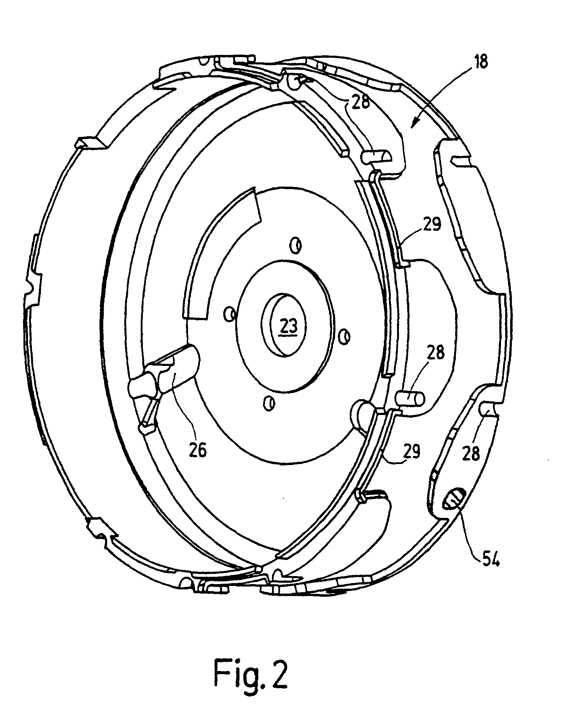

Der Verlauf dieses Kühlkanals 18 ist in Figur 2 zu erkennen. Diese zeigt das gleiche Gehäuse 5 wie Figur 1, allerdings ist in der Darstellung der Figur 2 der äußere Bereich der Außenwand 21 weggelassen, um den Blick auf den Kühlkanal 18 freizugeben. Wie man sieht, sind die Sacklöcher 28 von beiden Stirnseiten des Gehäuses 5 her in Bereiche der Außenwand 21 eingebracht, in denen der Kühlkanal 18 von der betreffenden Stirnseite entfernt verläuft, und haben eine Tiefe, mit der sie den Kühlkanal 18 nicht erreichen.

Das Gehäuse 5 ist einteilig in einem Gußverfahren hergestellt. Um in einem solchen Verfahren den Kühlkanal 18 herzustellen, formt man zunächst einen Sandkern in der Form des Kühlkanals und plaziert diesen in einer Gußform für das Gehäuse. Nach dem Gießprozeß wird der Sandkern durch die Schlitze 19 aus dem Gußwerkstück entfernt.

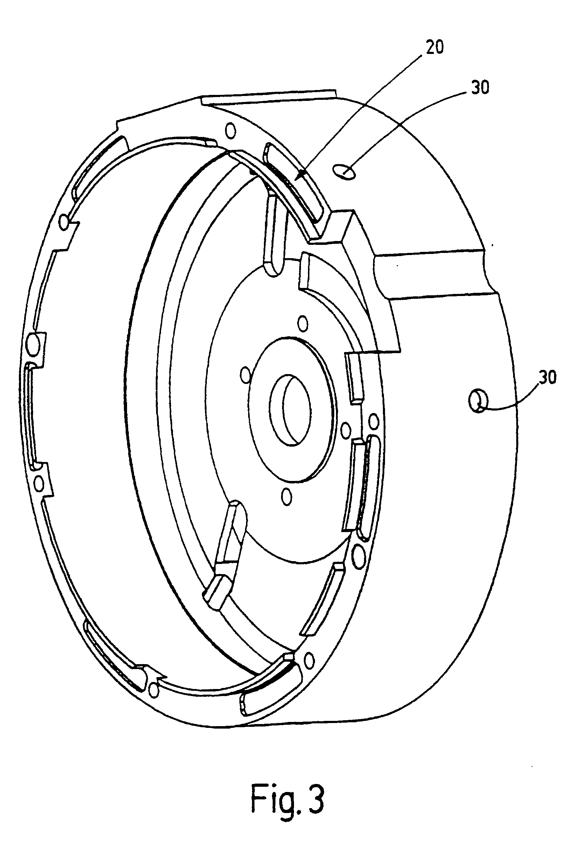

Die Schlitze 19 weisen jeweils eine im Bezug zu der Stirnseite 27 leicht vertiefte, umlaufende Schulterfläche 29 auf, die als Anschlag für die Plazierung einer Verschlußplatte 20 dient, wie in Figur 3 gezeigt. Zwischen der Verschlußplatte 20 und der Schulterfläche 29 kann ein Dichtungsring angeordnet sein. Die Verschlußplatten 20 werden in den Schlitzen 19 in beliebiger geeigneter Weise befestigt, zum Beispiel eingepreßt, verstemmt oder verbördelt, um die Schlitze 19 abzudichten.

Die Öffnungen, die zum Entfernen des Sandkerns nach dem Gießen dienen, müssen selbstverständlich nicht unbedingt die Form von Schlitzen 19 haben. Es besteht zum Beispiel auch die Möglichkeit, runde Öffnungen vorzusehen, die sich in besonders einfacher weise durch Einpressen einer Kugel mit geringfügigem Übermaß dicht verschließen lassen.

Nach dem Verschließen der Öffnungen beziehungsweise Schlitze 19 erhält man in dem Gehäuse 5 einen Kühlkanal 18, der dicht über den größeren Teil des Umfangs des Gehäuses 5 zwischen zwei Einbeziehungsweise Auslaßöffnungen 30 verläuft (siehe Figuren 1 oder 3) .

Alternativ zur Verwendung von Gießsand für die Form des Gießkörpers 18 kommt auch die Verwendung eines Kunststoffschaumes in Betracht, der beim Gießen von Metall in die Gußform des Gehäuses verdampft. Da dieser Dampf über den Ein- und Auslaßöffnungen des Gehäuses entsprechende Öffnungen der Gußform abgezogen werden kann, kann hier die Verwendung von Öffnungen wie den Schlitzen 19 zum Entfernen des Gießkerns vermieden werden, so daß ein Fertigungsschritt des Verschließens und Abdichtens dieser Öffnungen entfällt.

Figur 4 zeigt einen axialen Schnitt durch einen fertig montierten Starter-Generator. Man erkennt das Gehäuse 5 mit der Außenwand 21 und dem Flansch 22. An der der Brennkraftmaschine zugewandten Seite des Flansches 22 bildet das Gehäuse 5 eine Vertiefung 31, die vorgesehen ist, um ein Schwungrad der Brennkraftmaschine aufzunehmen. An der abgewandten Seite des Flansches ist ein Aktuator 6 verschraubt. Dieser umfaßt eine Befestigungsplatte 32 in Kontakt mit dem Flansch 22 und eine zylindrische Muffe 33, in der ein pneumatisches oder hydraulisches Stellglied 34 untergebracht ist, auf dessen Funktion später eingegangen wird. Durch die zentrale Bohrung 23 des Flansches erstreckt sich eine Hülse 35 des Aktuators und durch diese hindurch eine (nicht dargestellte) Kurbelwelle der Brennkraftmaschine.

An der Außenfläche der Muffe 33 sind zwei Kugellager 4 montiert und durch einen Sprengring axial gehalten. Die zwei Kugellager 4 tragen an ihren Außenringen eine Nabe 3 des Rotors 9 des Starter-Generators. Durch diese Anordnung ist der Rotor 9 von einer eventuellen Unwucht der Kurbelwelle entkoppelt und sehr exakt in Drehung geführt, was einen Aufbau der elektrischen Maschine mit geringen Toleranzen und schmalem Luftspalt zwischen dem Rotor 9 und einem Stator 12 ermöglicht.

Die Nabe 3 umfaßt in radialer Richtung von innen nach außen einen Ring, dessen Innenprofil an die Form der Kugellager angepaßt ist und die Nabe spielfrei an den Kugellagern hält, einen scheibenförmigen Abschnitt, der zur Gewichtseinsparung teilweise durchbrochen ist, und einen zylindrischen Abschnitt. Der scheibenförmige und der zylindrische Abschnitt bilden auf der dem Flansch 22 zugewandten Seite der Nabe einen Hohlraum 36. Ein Impulsrad 7, hier in Gestalt eines Zahnkranzes, ist an der Innenwand des zylindrischen Abschnitts mit in den Hohlraum 36 hineingerichteten Zähnen angeordnet. Das Impulsrad 7 ist als massives Teil oder aus gestanzten Blechen gefertigt und in dem zylindrischen Abschnitt durch Schweißen, Schrauben oder Nieten fixiert. Ein (in der Figur nicht dargestellter) in dem Hohlraum 36 angeordneter Sensor erfaßt Drehgeschwindigkeit und -richtung der Zähne des Impulsrades.

Der Rotor 9 umfaßt ferner ein Blechpaket 37, das am Außenumfang des zylindrischen Abschnitts der Nabe 3 thermisch angefügt ist, und in das Kurzschlußringe 12 und -stäbe 11 aus Kupfer eingebettet sind. Diese Kurzschlußringe und -stäbe 11 sind miteinander durch Löten, Ultraschall- oder Laserstrahlschweißen oder Kaltverpressen verbunden. Von den Kurzschlußstäben 11 sind allein die axial an beiden Seiten des Blechpakets 37 überstehenden Enden in der Figur zu sehen. Die Enden greifen in ringförmige Nuten 38 von Armierungsringen 10 ein, die sich jeweils entlang der radialen Stirnflächen des Blechpakets 37 und des zylindrischen Abschnitts der Nabe 3 erstrecken. Die radialen Außenseiten der Nuten 38 sind jeweils auf die Enden der Kurzschlußstäbe 11 aufgepreßt. So halten sie die Armierungsringe 10 in ihrer Position und verhindern ein Auswärtsfließen der Enden der Armierungsringe infolge von auf diese im Betrieb wirkenden Fliehkräften.

Die Armierungsringe 10 können aus Stahl oder einem faserverstärkten Kunststoff bestehen. Zum Auswuchten des Rotors kann von den Armierungsringen 10 lokal Material abgetragen werden, und zwar vorzugsweise in ihrem radial inneren Bereich.

Ein radial nach innen gerichteter Fortsatz des dem Flansch 22 zugewandten Armierungsrings 10 greift in den von der Nabe 3 gebildeten Hohlraum ein und bildet dort eine axiale Halterung für das Impulsrad 7.

Einer nicht in einer Figur dargestellten Abwandlung der Rotorkonstruktion zufolge umfaßt der Rotor ein Blechpaket, in dem vorgeformte Kanäle für die Kurzschlußstäbe mit Metall, insbesondere Aluminium, ausgegossen sind. Kurzschlußringe sind ebenfalls durch Gießen an den Stirnseiten des Blechpakets gebildet. Die Fertigung durch Gießen ist einfach und preiswert und liefert einen Rotor mit guter mechanischer Belastbarkeit, allerdings läßt die Verwendung von Aluminium keinen so kompakten Aufbau zu, wie er mit den eingefügten Ringen und Stäben 11 aus Kupfer erzielt werden kann.

Ein Stator 12 liegt an der Innenseite der radialen Außenwand 21 des Gehäuses 5 an. Der Stator und die Außenwand 21 sind vorzugsweise thermisch gefügt, um einen guten thermischen Kontakt zwischen beiden mit einer großen Querschnittsfläche zu gewährleisten. Wickelköpfe 13 des Stators 12 umfassen jeweils dem Rotor zugewandte Polstücke und um diese herumgewickelte Spulen 39. Die Ausdehnung der Polstücke in axialer Richtung entspricht der axialen Länge des Blechpakets 37 des Rotors 9, wie in der Figur durch gestrichelte Linien 40 angedeutet.

Um den Radius des Starter-Generators gering zu halten, sind die axial orientierten Spulen 39 der Wickelköpfe 13 mit geringer Länge und großer Dicke gewickelt. Um eine solche Spule 39 platzsparend in dem Gehäuse 21 unterzubringen, ist ein dem Flansch 22 zugewandter Bereich 41 der Spulen radial nach außen abgewinkelt.

Die Kurbelwelle, die die Hülse 35 durchläuft, greift mit ihrer Spitze in eine Bohrung eines Kupplungsflansches 1 ein, dessen radial äußere Bereiche in der in Figur 4 dargestellten Stellung zwischen zwei Reibringen 42,43 eingeklemmt sind. Der Reibring 43 ist an einem Übertragerring 44 befestigt, der über radiale Vorsprünge 45 mit der Nabe 3 in kraftschlüssigem Eingriff steht. Eine Tellerfeder 46 ist zwischen einem ringförmigen Vorsprung 47 des Übertragerrings 44 und einer von der Nabe 3 getragenen Scheibe 48 eingespannt. In dieser Stellung ist die Kupplung geschlossen, und es wird Drehmoment von der Kurbelwelle auf die elektrische Maschine übertragen. Die Kupplung verbindet den Rotor der elektrischen Maschine mit dem in der Vertiefung 31 untergebrachten, in Figur 4 nicht dargestellten Schwungrad zu einem Zweimassenschwinger, der Schwingungen des Systems Brennkraftmaschine - elektrische Maschine zu dämpfen beziehungsweise in einen Frequenzbereich zu verschieben vermag, der außerhalb des Drehzahlbereichs der Brennkraftmaschine liegt.

Durch Ausfahren des Aktuators nach rechts in der Figur kommt dessen Spitze mit dem Innenbereich der Tellerfeder 46 in Kontakt, so daß diese in sich verschwenkt wird und der Druck der Tellerfeder 46 auf den ringförmigen Vorsprung 47 nachläßt. Unter diesen Bedingungen wird der Übertragerring 44 von einer (nicht dargestellten) Feder von dem Kupplungsflansch 1 fort beaufschlagt, so daß sich der Kupplungsflansch 1 frei drehen kann.

Eine analog aufgebaute Kupplung 2 ist an der Getriebeseite des Starter-Generators montiert. Sie umfaßt einen an das Getriebe gekoppelten Kupplungsflansch 49, dessen radial äußerer Bereich zwischen Reibringen 50,51 eingeklemmt ist. Ein Reibring 50 und der Reibring 42 sind auf gegenüberliegenden Seiten eines Mitnehmerrings 52 montiert. Durch Ausüben eines axialen Drucks in der Figur nach links auf einen zentralen Bereich einer Tellerfeder 53 wird der von einem radial äußeren Bereich der Tellerfeder 53 auf einen Träger des Reibrings 51 ausgeübte Druck verringert, so daß der Kupplungsflansch 49 frei drehbar wird.

So können sowohl die Kurbelwelle des Motors als auch das Getriebe selektiv an den Starter-Generator gekoppelt werden. Der Starter-Generator ist somit wahlweise als Anlasser für die Brennkraftmaschine, als einziger Antriebsmotor des Fahrzeugs, als Unterstützungsmotor oder als Lichtmaschine während der Fahrt einsetzbar.

Figur 5 zeigt noch eine Draufsicht auf das Gehäuse 5 von rechts in Figur 4. In der Mitte des Gehäuses befindet sich der Aktuator 6. Eine Druckluftzuleitung 60 zum Betätigen des Aktuators und eine Druckausgleichsleitung 61 erstrecken sich jeweils durch Schlitze 26 im Flansch 22. Durch einen der Schlitze verläuft ferner eine Signalleitung 62 zu einem Sensorhalter 8, in dem der bereits angesprochene Sensor zum Erfassen der Drehbewegung des Rotors untergebracht ist.

Drei Versorgungskabel 17 für die drei Phasen des Stators 12 sind durch eine an der Stirnseite des Stators verschraubte Zugentlastung 15 gesichert.

Der oben beschriebene Starter-Generator kann mitsamt den Kupplungen als eine kompakte Baugruppe vollständig gefertigt und vor dem Einbau in ein Fahrzeug ausgetestet werden.

## Patentansprüche

1. Starter-Generator für ein Kraftfahrzeug mit einer mit einer Brennkraftmaschine des Kraftfahrzeugs koppelbaren elektrischen Maschine, die in einem flachzylindrischen Gehäuse untergebracht ist, das an einer Stirnseite mit Mitteln zur Befestigung an der Brennkraftmaschine versehen ist, wobei die elektrische Maschine (9,12) wählbar mit der Brennkraftmaschine und/oder einem Getriebe des Kraftfahrzeugs koppelbar ist, wobei das Gehäuse (5) an einer zusätzlichen, in axialer Richtung entgegengesetzten Stirnseite mit Mitteln (28) zur Befestigung an einem Gehäuse des Getriebes versehen ist, **dadurch gekennzeichnet, dass** ein Kühlkanal (18) in einer radialen Außenwand (21) des Gehäuses (5) in der axialen Richtung hin- und herschwingend verläuft.

2. Starter-Generator nach Anspruch 1, **dadurch gekennzeichnet, dass** die Mittel zur Befestigung (28) Sacklöcher sind, die sich jeweils von einer Stirnseite aus in die Außenwand (21) des Gehäuses (5) an einer Stelle erstrecken, an der der Kühlkanal (18) von der betreffenden Stirnseite entfernt verläuft.

3. Starter-Generator nach einem der Ansprüche 1 oder 2, **dadurch gekennzeichnet, dass** das Gehäuse (5) in einem Gießverfahren hergestellt ist und an einer der Stirnflächen Schlitze (19) zum Entfernen eines den Kühlkanal (18) definierenden Gusskerns aufweist.

4. Starter-Generator nach Anspruch 3, **dadurch gekennzeichnet, dass** die Schlitze (19) durch Einsatzteile (20) nach dem Entfernen des Gusskerns verschlossen sind.

5. Starter-Generator nach einem der Ansprüche 1 oder 2, **dadurch gekennzeichnet, dass** das Gehäuse in einem Gießverfahren hergestellt ist, bei dem ein den Kühlkanal (18) definierender Gusskern beim Gießen verdampft und der Dampf über Kühlmittelanschlüsse (30) des Kühlkanals abgeführt ist.

6. Starter-Generator nach einem der vorhergehenden Ansprüche, **dadurch gekennzeichnet, dass** das Gehäuse einen sich radial erstreckenden Flansch (22) umfasst, der einen Rotor (9) der elektrischen Maschine trägt.

7. Starter-Generator nach Anspruch 6, **dadurch gekennzeichnet, dass** der Rotor (9) mit dem Flansch (22) über einen Aktuator (6) verbunden ist.

8. Starter-Generator nach Anspruch 6 oder 7, **dadurch gekennzeichnet, dass** an der dem Flansch (22) zugewandten Seite des Rotors (9) ein Hohlraum (36) gebildet ist, in dem ein Impulsrad (7) und ein Sensor zum Erfassen einer Drehung des Impulsrades (7) untergebracht sind.

9. Starter-Generator nach einem der Ansprüche 6 bis 8, **dadurch gekennzeichnet, dass** der Rotor (9) über Wälzlager (4) getragen ist.

10. Starter-Generator nach einem der Ansprüche 6 bis 9, **dadurch gekennzeichnet, dass** der Rotor (9) ein Blechpaket (37) mit Kurzschlussringen und Kurzschlussstäben (11) sowie Armierungsringe (10) umfasst, die an den an den axialen Stirnseiten des Blechpakets (37) überstehenden Enden der Kurzschlussstäbe (11) verankert sind.

11. Starter-Generator nach Anspruch 10, **dadurch gekennzeichnet, dass** die Armierungsringe (10) Ringnuten (38) zum Aufnehmen der überstehenden Enden aufweisen.

12. Starter-Generator nach einem der Ansprüche 10 oder 11, **dadurch gekennzeichnet, dass** die Armierungsringe (10) aus Stahl oder Faser-Verbundmaterial bestehen.

13. Starter-Generator nach einem der Ansprüche 10 bis 12, **dadurch gekennzeichnet, dass** wenigstens ein Armierungsring (10) zum Auswuchten des Rotors (9) bearbeitet ist.

14. Starter-Generator nach einem der Ansprüche 6 bis 9, **dadurch gekennzeichnet, dass** der Rotor ein Blechpaket mit Kurzschlussleitern umfasst, wobei die Kurzschlussleiter durch Ausgießen von Aussparungen des Blechpakets gebildet sind.

15. Starter-Generator nach einem der vorhergehenden Ansprüche, **dadurch gekennzeichnet, dass** ein Stator (12) der elektrischen Maschine in radialer Richtung gebogene Wickelköpfe (13) aufweist.

16. Starter-Generator nach einem der vorhergehenden Ansprüche, **dadurch gekennzeichnet, dass** ein Stator (12) der elektrischen Maschine mit dem Gehäuse (5) thermisch gefügt ist.

## Claims

1. Starter generator for a motor vehicle having an electric machine which can be coupled to an internal combustion engine of the motor vehicle and is accommodated in a flat-cylindrical housing which is provided on an end side with means for attachment to the internal combustion engine, the electric machine (9, 12) being capable of being selectively coupled to the internal combustion engine and/or a gearbox of the motor vehicle, the housing (5) being provided on an additional end side, opposite in the axial direction, with means (28) for attachment to a housing of the gearbox, **characterized in that** a cooling duct (18) runs in a radial outer wall (21) of the housing (5) so as to oscillate in the axial direction.

2. Starter-generator according to Claim 1, **characterized in that** the attachment means (28) are blind holes which each extend from one end side into the outer wall (21) of the housing (5) of the pointer which the cooling duct (18) runs at a distance from the respective end side.

3. Starter-generator according to one of Claims 1 or 2, **characterized in that** the housing (5) is manufactured using a casting method and has a slot (19) on one of the end faces for removing a cast core which defines the cooling duct (18).

4. Starter-generator according to Claim 3, **characterized in that** the slots (19) are closed off by means of inserts (20) after the cast core has been removed.

5. Starter-generator according to Claims 1 or 2, **characterized in that** the housing is manufactured using a casting method in which a cast core which defines the cooling duct (18) vapourizes during the casting, and the vapour is carried away via coolant connections (30) of the cooling duct.

6. Starter-generator according to one of the preceding claims, **characterized in that** the housing comprises a radially extending flange (22) which is fitted with a rotor (9) of the electric machine.

7. Starter-generator according to Claim 6, **characterized in that** the rotor (9) is connected to the flange (22) via an actuator (6).

8. Starter-generator according to Claim 6 or 7, **characterized in that** a cavity (36) in which a pulse wheel (7) and a sensor for sensing a rotation of the pulse wheel (7) are accommodated is formed on that side of the rotor (9) which faces the flange (22).

9. Starter-generator according to one of Claims 6 to 8, **characterized in that** the rotor (9) is supported by means of roller bearings (4).

10. Starter-generator according to one of Claims 6 to 9, **characterized in that** the rotor (9) comprises a core stack (37) with short-circuit rings and short-circuit rods (11) as well as reinforcement rings (10) which are anchored to the ends, protruding at the fuel end sides of the core stack (37), of the short-circuit rods (11).

11. Starter-generator according to Claim 10, **characterized in that** the reinforcement rings (10) have annular grooves (38) for receiving the protruding ends.

12. Starter-generator according to one of Claims 10 or 11, **characterized in that** the reinforcement rings (10) are composed of steel or composite fibre material.

13. Starter-generator according to one of Claims 10 to 12, **characterized in that** at least one reinforcement ring (10) is processed in order to balance the rotor (9) .

14. Starter-generator according to one of Claims 6 to 9, **characterized in that** the rotor comprises a core stack with short-circuit leads, the short-circuit leads being formed by testing cutouts in the core stack.

15. Starter-generator according to one of the preceding claims, **characterized in that** a stator (12) of the electric machine has winding heads (13) which are bent in the radial direction.

16. Starter-generator according to one of the preceding claims, **characterized in that** a stator (12) of the electric machine is thermally joined to the housing (5).

## Revendications

1. Démarreur-générateur de véhicule automobile comportant une machine électrique susceptible d'être couplée au moteur à combustion interne du véhicule, cette machine étant logée dans un boîtier cylindrique plat dont une face frontale comporte des moyens de fixation sur le moteur à combustion interne,
la machine électrique (9, 12) pouvant être couplée au choix au moteur à combustion interne et/ou à la boîte de vitesses du véhicule,
le boîtier (5) étant en outre muni sur une face frontale supplémentaire, à l'opposé dans la direction axiale, du moyen (28) pour être fixé à la boîte de vitesses,
**caractérisé par**
un canal de refroidissement (18) prévu dans la paroi extérieure radiale (21) du boîtier (5) et qui circule dans la direction axiale de la paroi suivant un tracé de va et vient.

2. Démarreur-générateur selon la revendication 1,
**caractérisé en ce que**
les moyens de fixation (28) sont des perçages borgnes qui partent chaque fois d'une face frontale et pénètrent dans la paroi extérieure (21) du boîtier (5) à un endroit auquel le canal de refroidissement (18) passe à distance de la face frontale correspondante.

3. Démarreur-générateur selon l'une quelconque des revendications 1 ou 2,
**caractérisé en ce que**
le boîtier (5) est fabriqué par coulée et l'une des faces frontales comporte des fentes (19) pour enlever le noyau de coulée servant à former le canal de refroidissement (18).

4. Démarreur-générateur selon la revendication 3,
**caractérisé en ce que**
les fentes (19) sont fermées par des pièces rapportées (20) après l'enlèvement du noyau de coulée.

5. Démarreur-générateur selon l'une quelconque des revendications 1 ou 2,
**caractérisé en ce que**
le boîtier est fabriqué par coulée, et selon ce procédé, on vaporise à la coulée le noyau définissant le canal de refroidissement (18), la vapeur étant évacuée par les branchements d'agent de refroidissement (30) du canal de refroidissement.

6. Démarreur-générateur selon l'une quelconque des revendications précédentes,
**caractérisé en ce que**
le boîtier comporte une bride (22) s'étendant radialement et qui porte un rotor (9) de la machine électrique.

7. Démarreur-générateur selon la revendication 6,
**caractérisé en ce que**
le rotor (9) est relié à la bride (22) par un actionneur (6).

8. Démarreur-générateur selon l'une quelconque des revendications 6 ou 7,
**caractérisé en ce que**
le côté du rotor (9) tourné vers la bride (22) forme une cavité (36) recevant une roue impulsionnelle (7) et un capteur pour saisir la vitesse de rotation de la roue impulsionnelle (7).

9. Démarreur-générateur selon l'une quelconque des revendications 6 à 8,
**caractérisé en ce que**
le rotor (9) est porté par le palier à roulement (4).

10. Démarreur-générateur selon l'une quelconque des revendications 6 à 9,
**caractérisé en ce que**
le rotor (9) comprend un paquet de tôles (37) avec des bagues de court-circuit et des tiges de court-circuit (11) ainsi que des anneaux d'armature (10) accrochés aux extrémités des tiges de court-circuit (11) qui dépassent des faces frontales axiales du paquet de tôles (37).

11. Démarreur-générateur selon la revendication 10,
**caractérisé en ce que**
les anneaux d'armature (10) ont des rainures annulaires (38) pour recevoir les extrémités qui dépassent.

12. Démarreur-générateur selon l'une quelconque des revendications 10 ou 11,
**caractérisé en ce que**
les anneaux d'armature (10) sont en acier ou en matière composite renforcée de fibres.

13. Démarreur-générateur selon l'une quelconque des revendications 10 à 12,
**caractérisé en ce qu'**
au moins un anneau d'armature (10) est usiné pour équilibrer le rotor (9).

14. Démarreur-générateur selon l'une quelconque des revendications 6 à 9,
**caractérisé en ce que**
le rotor comprend un paquet de tôles avec des conducteurs de court-circuit et ces conducteurs de court-circuit sont réalisés en remplissant par coulée des cavités du paquet de tôles.

15. Démarreur-générateur selon l'une quelconque des revendications précédentes,
**caractérisé en ce qu'**
un stator (12) de la machine électrique comporte des têtes de bobinage (13) courbées dans la direction radiale.

16. Démarreur-générateur selon l'une quelconque des revendications précédentes,
**caractérisé en ce que**
le stator (12) de la machine électrique est assemblé en contact thermique avec le boîtier (5).
